# EUROPÄISCHE PATENTSCHRIFT

(11) **EP 3 117 797 B1**
(45) Veröffentlichungstag und Bekanntmachung des Hinweises auf die Patenterteilung: **01.11.2017**
(21) Anmeldenummer: 15176897.5
(22) Anmeldetag: 15.07.2015
(51) Int. Cl.: A61C 15/02, A61C 15/04

(54) **ZAHNSEIDENHALTER MIT ZAHNSTOCHER**
DENTAL FLOSS HOLDER WITH TOOTHPICK
SUPPORT DE FIL DENTAIRE AVEC CURE-DENT

(43) Veröffentlichungstag der Anmeldung: 18.01.2017
(73) Patentinhaber: M+C Schiffer GmbH, 53577 Neustadt-Wied (DE)
(72) Erfinder: SCHIFFER, Küros, 50933 Köln (DE)
(74) Vertreter: Grünecker Patent- und Rechtsanwälte PartG mbB

(56) Entgegenhaltungen:
- WO-A1-2014/169398
- CN-U- 201 558 187
- KR-A- 20130 080 110
- US-A- 5 829 458

## Beschreibung

Die vorliegende Erfindung betrifft einen Zahnseidenhalter mit einem Grundkörper, der zwei Arme ausbildet, zwischen denen zumindest ein Zahnseidenfaden gespannt ist und von dem ein Zahnstocherelement abragt, das von einem in seiner Schutzstellung befindlichen Schutzelement umgeben ist. Das Schutzelement ist in eine Gebrauchsstellung verschwenkbar, in welcher das Schutzelement das Zahnstocherelement freigibt, so dass das Zahnstocherelement von dem Grundkörper abragt und zur Reinigung von Zahnzwischenräumen durch Einführen des Zahnstocherelementes in den Zahnzwischenraum genutzt werden kann.

Die vorliegende Erfindung betrifft insbesondere einen Zahnseidenhalter mit dem oberbegrifflichen Merkmal von Anspruch 1. Ein solcher Zahnseidenhalter ist beispielsweise aus der US 5,829,458 bekannt.

Der vorbekannte Zahnseidenhalter ermöglicht zwar eine ordentliche Reinigung des Zahnzwischenraumes. Er lässt aber hinsichtlich seiner Handhabung noch Wünsche offen. Die WO 2014/169398 A1 offenbart einen Zahnseidenhalter mit einem Grundkörper, der ein verschwenkbar daran angeordnetes Zahnstocherelement in sich aufnimmt. In einer Gebrauchsstellung, in der das Zahnstocherelement den Grundkörper überragt, kann das Zahnstocherelement an dem Grundkörper über einen Druckknopf fixiert werden.

Der vorliegenden Erfindung liegt das Problem zugrunde, einen Zahnseidenhalter der eingangs genannten Art mit verbesserten Gebrauchseigenschaften anzugeben.

Zur Lösung dieses Problems wird mit der vorliegenden Erfindung ein Zahnseidenhalter mit den Merkmalen von Anspruch 1 vorgeschlagen. Der erfindungsgemäße Zahnseidenhalter hat ein Arretierungselement zur Festlegung des Schutzelementes in der Gebrauchsstellung. Dabei ist das Schutzelement üblicherweise durch zumindest ein Filmscharnier mit dem Grundkörper verbunden und dementsprechend von seiner Schutzstellung, in welcher das Schutzelement das Zahnstocherelement umgibt, in die Gebrauchsstellung verschwenkbar. Das Schutzelement ist dabei üblicherweise um etwa 180° verschwenkbar, um das Schutzelement in der Gebrauchsstellung an die Oberfläche des Grundkörpers anzulegen. In dieser Position des Schutzelementes wird vorzugsweise das Arretierungselement des erfidungsgemäßen Zahnseidenhalters wirksam. Es legt das Schutzelement in dieser Gebrauchsstellung fest, so dass verhindert wird, dass die durch das Filmscharnier beim Verschwenken des Schutzelementes bewirkten elastischen Verspannungen innerhalb des Filmscharniers zu einer Rückstellung des Schutzelementes in die Schutzstellung führt. So liegt das Zahnstocherelement in der Gebrauchsstellung des Schutzelementes frei und kann zum Reinigen der Zahnzwischenräume genutzt werden. So ist nicht zu befürchten, dass sich während der Benutzung des Zahnseidenhalters als Zahnstocher das Schutzelement in den Mundraum drängt bzw. das Zahnstocherelement umgibt und damit eine Benutzung desselben zur Reinigung von Zahnzwischenräumen unmöglich macht.

Gemäß der vorliegenden Erfindung ist das Schutzelement V-förmig ausgebildet und nimmt in der Gebrauchsstellung das Arretierungselement in sich auf. Tatsächlich klemmen beide Schenkel des V-förmigen Schutzetementes in der Gebrauchsstettung das Arretierungsetement zwischen sich ein, so dass eine wirkungsvolle Festlegung des Schutzelementes in der Gebrauchsstellung erreicht wird. Diese Festlegung kann eine form- und/oder reibschlüssige Verbindung sein. Dabei können die gegenüberliegenden Arme des V-förmigen Schutzelementes geringfügig nach außen gedehnt werden, so dass diese mit einer gewissen radialen Vorspannung das Arretierungselement zwischen sich klemmen, wodurch die Festlegung des Schutzelementes verbessert ist.

Mit Blick auf eine gute Handhabung des Zahnstochers durch Greifen des Grundkörpers wird gemäß einer bevorzugten Weiterbildung der vorliegenden Erfindung vorgeschlagen, dass das Schutzelement in der Gebrauchsstellung plan auf dem Grundkörper aufliegt. So kann ein das Zahnstocherelement nutzender Benutzer den Grundkörper zwischen den Fingern einer Hand klemmen, wodurch das Schutzelement auf den Grundkörper aufgelegt und dort festgelegt wird. Die erhöhte Dicke dieses gegriffenen Teils des Zahnseidenhalters verbessert die Handhabung desselben.
rungskopfes kann konvex ausgebildet sein, um eine Griffmulde zu schaffen, die für eine verbesserte Haptik sorgt.

Gemäß einer bevorzugten Weiterbildung der vorliegenden Erfindung hat der Arretierungskopf zumindest eine mit dem Schutzelement zusammenwirkende konvexe Funktionsfläche. Das Schutzelement hat korrespondierend hierzu eine konkave Gegenfläche, die beim Festlegen des Schutzelementes in der Gebrauchsstellung mit der konvexen Funktionsfläche zusammenwirkt. Angestrebt ist eine möglichst großflächige Überdeckung zwischen dem Schutzelement und dem Arretierungselement in der Gebrauchsstellung, die für eine solide Festlegung des Schutzelementes in der Gebrauchsstellung sorgt. Bevorzugt sind zwei Funktionsflächen an dem Schutzelement vorgesehen, die vorzugsweise gegenüberliegend zueinander an den gegenüberliegenden Armen des V-förmigen Schutzelementes ausgebildet sind.

Mit Blick auf eine gute und sichere Anbindung des Schutzelementes an den Grundkörper wird gemäß einer bevorzugten Weiterbildung der vorliegenden Erfindung vorgeschlagen, das Schutzelement über zwei voneinander beabstandete Filmscharniere mit dem Grundkörper zu verbinden. Zwischen diesen Filmscharnieren ist üblicherweise die Basis des Zahnstocherelementes vorgesehen, über welche das Zahnstocherelement mit dem Grundkörper verbunden ist.

Gemäß einer bevorzugten Weiterbildung der vorliegenden Erfindung ist das Zahnstocherelement als mit einem Winkel von zwischen 10° und 25° ausgebildete Spitze geformt, wodurch die Reinigung der Zahnzwischenräume verbessert werden kann.

Das Schutzelement ist gemäß einer weiteren bevorzugten Weiterbildung der vorliegenden Erfindung so verschwenkbar mit dem Grundkörper verbunden, dass das Schutzelement in einer Richtung gegen die Oberfläche des Grundkörpers anlegbar ist und in einer entgegengesetzten Richtung eine Anlage an die Oberfläche des Grundkörpers verhindert. Das hierzu vorgesehene Mittel wird üblicherweise durch das Filmscharnier selbst ausgebildet. Das Filmscharnier ist in Dickenrichtung des Grundkörpers üblicherweise exzentrisch vorgesehen, bevorzugt nahe oder auf Höhe der Oberfläche des Grundkörpers und des in einer Ebene hierzu vorgesehenen Schutzelementes.

Gemäß einer bevorzugten Weiterbildung der vorliegenden Erfindung ist das Arretierungselement in etwa auf der Mitte in Längsrichtung eines länglichen, durch eine Basis des Grundkörpers, von der die Arme abragen, durch das Zahnstocherelement und durch das Schutzelement gebildeten Griff vorgesehen. Dieser Griff hat bevorzugt seine größte Breite in etwa auf Höhe des Arretierungselementes oder auf Höhe eines Filmscharniers, welches das Schutzelement mit dem Grundkörper verbindet. Der Griff verjüngt sich von dieser größten Breite vorzugsweise zu beiden Richtungen konisch, wodurch die Haptik des Zahnseidenhalters verbessert wird.

Gemäß einer bevorzugten Weiterbildung der vorliegenden Erfindung sind die Arme im Wesentlichen als Halbkreisring ausgebildet. Eine die beiden Enden der Arme verbindende Linie schließt dabei vorzugsweise mit der Mittellängsachse des Griffs einen Winkel vor zwischen 25° und 65° ein.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische Seitenansicht des Ausführungsbeispiels;
- Figur 2: eine Draufsicht des in Fig. 1 gezeigten Ausführungsbeispiels;
- Figur 3: eine Seitenansicht des Ausführungsbeispiels; und
- Figur 4: eine Darstellung gemäß Fig. 2 mit dem Schutzelement in der Gebrauchsstellung.

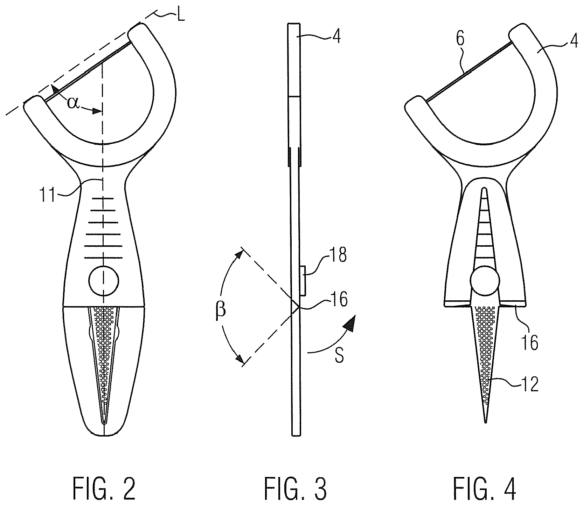

Die Figuren zeigen ein Ausführungsbeispiel eines Zahnseidenhalters, der einen mit Bezugszeichen 2 gekennzeichneten Grundkörper hat. Dieser Grundkörper 2 bildet zwei Arme 4 aus, die zwischen sich einen Zahnseidenfaden 6 einspannen. Dieser Zahnseidenfaden 6 ist beim Herstellen des Zahnseidenhalters durch Spritzgießen eines Kunststoffes mit dem die Arme 4 bildenden Kunststoff verbunden. Die jeweils befestigungsseitigen Enden des Zahnseidenfadens 6 werden dabei umspritzt und damit mit dem Grundkörper 2 verbunden. Die Arme 4 bilden in etwa einen Halbkreisring aus. Die freien Enden der Arme sind indes leicht tangential über den Halbkreis hinaus verlängert und erstrecken sich parallel zueinander. Wie Fig. 2 verdeutlicht, verläuft eine die beiden Enden der Arme 4 verbindende Linie L in einem Winkel α von 55° relativ zu einer Mittellängsachse M. Diese Mittellängsachse M ist die Symmetrieachse eines mit Bezugszeichen 8 gekennzeichneten Griffs, der eine durch den Grundkörper 2 gebildete Basis 10, ein mittig und stirnseitig von der Basis 10 abragendes, streng dreieckig ausgebildetes Zahnstocherelement 12 sowie ein dieses Zahnstocherelement 12 umgebendes V-förmiges Schutzelement 14 umfasst.

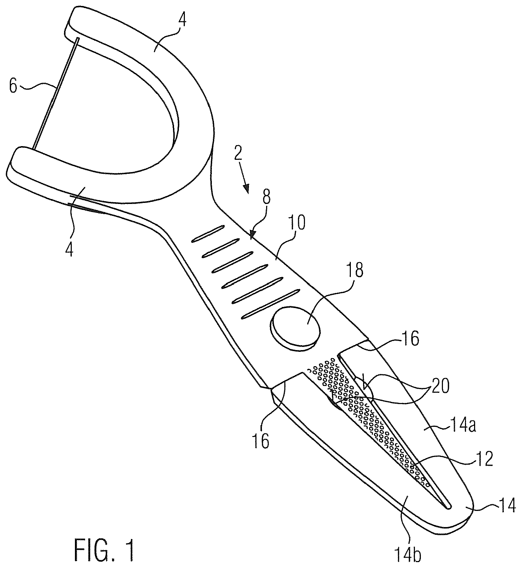

Das Schutzelement 14 ist durch zwei voneinander beabstandete Filmscharniere 16 verschwenkbar an dem Grundkörper 2 gelagert. Das V-förmige Schutzelement hat vorne eine abgerundete Spitze, die das mit einem Winkel von etwa 20° spitz zulaufende Zahnstocherelement 12 endseitig umgibt und schützt, wenn sich das Schutzelement 14 in der in den Figuren 1-3 gezeigten Schutzstellung befindet. In dieser Schutzstellung liegen die sich parallel zueinander erstreckenden Oberflächen des Schutzelementes 14 höhengleich mit den entsprechenden Oberflächen des Grundkörpers 2.

Wie Fig. 1 verdeutlicht, ragt von einer Oberfläche des Grundkörpers 2 ein Arretierungselement in Form eines Arretierungskopfes 18 ab. Der Arretierungskopf 18 hat eine kreisförmige Grundfläche. Die Höhe des Arretierungskopfes 18 über der Oberfläche des Grundkörpers 2 entspricht in etwa der Dicke des Schutzelementes 14. Die Außenumfangsfläche des Arretierungskopfes 18 ist zylindrisch. Korrespondierend zu dieser konvexen Außenumfangsfläche des Arretierungskopfes 18 haben zwei mit Bezugszeichen 14a, 14b gekennzeichnete Schenkel des Schutzelementes an gegenüberliegenden Innenseiten konkave Ausnehmungen, welche Gegenflächen 20 für die konvexe Außenumfangsfläche des Arretierungskopfes 18 ausbilden.

Wie Fig. 3 verdeutlicht, befinden sich die Filmscharnier 16 innerhalb derjenigen Ebenen, die durch die in den Figuren 1 und 2 erkennbare Oberfläche des Grundkörpers 2 gebildet ist. Davon ausgehend divergieren die einander gegenüberliegenden Stirnflächen der Schenkel 14a, 14b einerseits und der Basis 10 andererseits. In der in Fig. 3 gezeigten Schutzstellung schließen diese einander gegenüberliegenden Flächen einen Winkel β von ca. 90° zwischen sich ein. Aufgrund dieser Ausgestaltung kann das Schutzelement 14 lediglich in der in Fig. 3 eingezeichneten Schwenkrichtung S verschwenkt werden, um auf die Oberfläche des Grundkörpers 2 angelegt zu werden. In einer entgegengesetzten Schwenkrichtung stoßen schließlich die einander gegenüberliegenden Stirnseitenflächen des Schutzelementes 14 einerseits und des Grundkörpers 2 andererseits gegeneinander an. Danach ist ein weiteres Verschwenken nicht mehr möglich. Durch die Ausgestaltung wird danach verhindert, dass das Schutzelement 14 auf die falsche Seite verschwenkt wird. Das Schutzelement 14 kann dementsprechend lediglich gegen diejenige Oberfläche des Grundkörpers 2 angelegt werden, der von dem scheibenförmigen Arretierungskopf 18 überragt ist. In Folge dessen legen sich die konkaven Gegenflächen 20 an den Arretierungskopf 18 umfänglich an und legen das danach in der Gebrauchsstellung befindliche Schutzelement 14 gegenüber dem Grundkörper 2 fest. Der entsprechende Zustand ist in Fig. 4 dargestellt, wobei das Schutzelement 14 in Blickrichtung hinter den Grundkörper 2 vorgesehen ist. Das Zahnstocherelement 14 ragt nun frei von dem Grundkörper 2 ab und kann zur Reinigung der Zahnzwischenräume genutzt werden.

In der in Fig. 4 gezeigten Gebrauchsstellung hat der Griff 8 eine durch die Stärke des Schutzelementes 14 verdoppelte Dicke und kann dementsprechend gut gehalten werden. Wie Fig. 2 verdeutlicht, befindet sich die größte Breite des Griffs 8 in etwa auf Höhe der Filmscharniere 16, so dass diese das Schutzelement 14 mit guter Filmscharnierlänge und damit solide verschwenkbar lagern können. Der Arretierungskopf 18 befindet sich etwa auf der mittleren Länge des Griffs 8, der in der Schutzstellung nach Fig. 2 durch das freie Ende des Schutzelementes 14 einerseits und durch die äußere Umfangsfläche des Halbkreisringes andererseits gebildet wird, der die Arme 4 ausbildet.

### Bezugszeichenliste

- 2: Grundkörper
- 4: Arm
- 6: Zahnseidenfaden
- 8: Griff
- 10: Basis
- 12: Zahnstocherelement
- 14: Schutzelement
- 14a, 14b: Schenkel
- 16: Filmscharnier
- 18: Arretierungskopf
- 20: Gegenfläche
- L: Linie
- M: Mittelachse

## Patentansprüche

1. Zahnseidenhalter mit einem Grundkörper (2), der zwei Arme (4) ausbildet, zwischen denen zumindest ein Zahnseidenfaden (6) gespannt ist, und von dem ein Zahnstocherelement (12) abragt, das von einem in seiner Schutzstellung befindlichen V- förmig ausgebildeten Schutzelement (14) umgeben ist, das in eine Gebrauchsstellung verschwenkbar ist, in welcher das Zahnstocherelement (12) frei von dem Grundkörper (2) abragt, **gekennzeichnet durch**
ein Arretierungselement (18) zur Festlegung des Schutzelementes in der Gebrauchsstellung, das so angeordnet und ausgebildet ist, dass zwei Schenkel des.
V-förmig ausgebildeten Schutzelementes (14) das Arretierungselement (18) in der Gebrauchsstellung zwischen sich aufnehmen und einklemmen.

2. Zahnseidenhalter nach Anspruch 1, **dadurch gekennzeichnet, dass** das Schutzelement (14) in der Gebrauchsstellung plan an dem Grundkörper (2) aufliegt.

3. Zahnseidenhalter nach einem der vorherigen Ansprüche, **dadurch gekennzeichnet, dass** das Arretierungselement durch einen eine im Wesentlichen plane Oberfläche des Grundkörpers (2) überragenden Arretierungskopf (18) gebildet ist.

4. Zahnseidenhalter nach Anspruch 3, **dadurch gekennzeichnet, dass** der Arretierungskopf (18) scheibenförmig ausgebildet ist.

5. Zahnseidenhalter nach Anspruch 3 oder 4, **dadurch gekennzeichnet, dass** der Arretierungskopf eine konvexe stirnseitige Oberfläche hat.

6. Zahnseidenhalter nach einem der vorherigen Ansprüche, **dadurch gekennzeichnet, dass** das Arretierungselement (18) zumindest eine mit dem Schutzelement (14) zusammenwirkende konvexe Funktionsfläche aufweist und dass das Schutzelement zumindest eine hiermit zusammenwirkende konkave Gegenfläche (20) hat.

7. Zahnseidenhalter nach einem der vorherigen Ansprüche, **dadurch gekennzeichnet, dass** Schutzelement (14) über zwei voneinander beabstandete Filmscharniere (16) mit dem Grundkörper (2) verbunden ist.

8. Zahnseidenhalter nach einem der vorherigen Ansprüche, **dadurch gekennzeichnet, dass** das Zahnstocherelement (12) als mit einem Winkel von zwischen 10° und 25° ausgebildete Spitze geformt ist.

9. Zahnseidenhalter nach einem der vorherigen Ansprüche, **dadurch gekennzeichnet, dass** das Schutzelement (14) so verschwenkbar mit dem Grundkörper (2) verbunden ist, dass das Schutzelement (14) in einer Richtung gegen die Oberfläche des Grundkörpers (2) anlegbar ist und in einer entgegengesetzten Richtung (S) eine Anlage an die Oberfläche des Grundkörpers (2) verhindert wird.

10. Zahnseidenhalter nach einem der vorherigen Ansprüche, **dadurch gekennzeichnet, dass** das Arretierungselement (18) in etwa auf der Mitte in Längsrichtung (M) eines länglichen, durch eine Basis (10) des Grundkörpers (2), von der die Arme (4) abragen, durch das Zahnstocherelement (12) und das Schutzelement (14) gebildeten Griff (8) vorgesehen ist.

11. Zahnseidenhalter nach einem der vorherigen Ansprüche, **dadurch gekennzeichnet, dass** der Griff (8) seine größte Breite in etwa auf Höhe des Arretierungselementes (18) oder eines Filmscharniers (16) hat, das das Schutzelement (14) mit dem Grundkörper (2) verbindet und das sich der Griff (8) von dort konisch zu beiden Seiten verjüngt.

12. Zahnseidenhalter nach einem der vorherigen Ansprüche, **dadurch gekennzeichnet, dass** die Arme (4) im Wesentlichen als Halbkreisring ausgebildet sind und dass eine die beiden Enden der Arme verbindende Linie (L) mit der Mittellängsachse (M) des Griffs (8) einen Winkel von zwischen 45° und 65° einschließt.

## Claims

1. A dental floss holder comprising a basic body (2), which forms two arms (4) having at least one dental floss thread (6) tensioned between them and from which a toothpick element (12) projects, said toothpick element being surrounded by a V-shaped protection element (14), which is located at its protective position and which is adapted to be pivoted to a position of use, where the toothpick element (12) projects freely from the basic body (2),
**characterized by**
an arresting element (18) for locking the protection element at the position of use, said arresting element being arranged and configured such that, at the position of use, two legs of the V-shaped protection element (14) receive the arresting element (18) between them and lock it in position.

2. The dental floss holder according to claim 1, **characterized in that,** at the position of use, the protection element (14) rests on the basic body (2) in a planar fashion.

3. The dental floss holder according to one of the preceding claims, **characterized in that** the arresting element is defined by an arresting head (18) projecting beyond a substantially planar surface of the basic body (2).

4. The dental floss holder according to claim 3, **characterized in that** the arresting head (18) is disk-shaped.

5. The dental floss holder according to claim 3 or 4, **characterized in that** the arresting head has a convex surface on the face side.

6. The dental floss holder according to one of the preceding claims, **characterized in that** the arresting element (18) has at least one convex functional surface cooperating with the protection element (14), and that the protection element has at least one convex mating surface (20) cooperating with said convex functional surface.

7. The dental floss holder according to one of the preceding claims, **characterized in that** the protection element (14) is connected to the basic body (2) via two spaced-apart film hinges (16).

8. The dental floss holder according to one of the preceding claims, **characterized in that** the toothpick element (12) is formed as a tip configured with an angle between 10° and 25°.

9. The dental floss holder according to one of the preceding claims, **characterized in that** the protection element (14) is pivotably connected to the basic body (2) such that the protection element (14) is adapted to be placed in position against the surface of the basic body (2) in one direction, while, in an opposite direction (S), it is prevented from being placed in position against the surface of the basic body (2).

10. The dental floss holder according to one of the preceding claims, **characterized in that** the arresting element (18) is provided approximately in the middle in the longitudinal direction (M) of an elongate handle (8) defined by a base (10) of the basic body (2), from which the arms (4) project, by the toothpick element (12) and by the protection element (14).

11. The dental floss holder according to one of the preceding claims, **characterized in that** the handle (8) has its maximum width approximately where the arresting element (18) or a film hinge (16) is, said film hinge (16) connecting the protection element (14) to the basic body (2), and that the handle (8) conically tapers towards both sides from this point.

12. The dental floss holder according to one of the preceding claims, **characterized in that** the arms (4) are configured substantially as a semicircular ring, and that a line (L) interconnecting the two ends of the arms encloses with the longitudinal center axis (M) of the handle (8) an angle between 45° and 65°.

## Revendications

1. Support de fil dentaire avec un corps principal (2) formant deux bras (4) entre lesquels est tendu au moins un fil dentaire (6) et à partir duquel fait saillie un élément cure-dent (12) qui est entouré par un élément de protection (14) en forme de V dans sa position de protection et qui peut être pivoté dans une position d'utilisation dans laquelle l'élément cure-dent (12) fait librement saillie à partir du corps de base (2),
**caractérisé par**
un élément d'arrêt (18) pour fixer l'élément de protection dans la position d'utilisation qui est disposé et configuré de telle manière que deux bras de l'élément de protection (14) en forme de V reçoivent entre eux et coincent l'élément d'arrêt (18) dans la position d'utilisation.

2. Support de fil dentaire selon la revendication 1, **caractérisé en ce que** dans sa position d'utilisation, l'élément de protection (14) repose de manière plane sur le corps de base (2).

3. Support de fil dentaire selon l'une des revendications précédentes, **caractérisé en ce que** l'élément d'arrêt est formé par une tête d'arrêt (18) surplombant une surface substantiellement plane du corps principal (2).

4. Support de fil dentaire selon la revendication 3, **caractérisé en ce que** la tête d'arrêt (18) est en forme de disque.

5. Support de fil dentaire selon la revendication 3 ou 4, **caractérisé en ce que** la tête d'arrêt a une surface frontale convexe.

6. Support de fil dentaire selon l'une des revendications précédentes, **caractérisé en ce que** l'élément d'arrêt (18) comporte au moins une surface fonctionnelle convexe coopérant avec l'élément de protection (14) et que l'élément de protection a au moins une surface opposée (20) concave coopérant avec celle-ci.

7. Support de fil dentaire selon l'une des revendications précédentes, **caractérisé en ce que** l'élément de protection (14) est relié avec le corps de base (2) par l'intermédiaire de deux charnières à film espacées (16).

8. Support de fil dentaire selon l'une des revendications précédentes, **caractérisé en ce que** l'élément cure-dent (12) prend la forme d'une pointe avec un angle compris entre 10° et 25°.

9. Support de fil dentaire selon l'une des revendications précédentes, **caractérisé en ce que** l'élément de protection (14) est relié de manière pivotante avec le corps principal (2) de telle sorte que, dans une direction, l'élément de protection (14) peut venir en appui sur la surface du corps principal (2) et qu'un appui sur la surface du corps principal (2) est empêché dans une direction opposée (S).

10. Support de fil dentaire selon l'une des revendications précédentes, **caractérisé en ce que** l'élément d'arrêt (18) est prévu approximativement au milieu dans la direction longitudinale (M) d'une poignée oblongue (8) formée par l'élément cure-dent (12) et l'élément de protection (14) et une base (10) du corps principal (2) à partir duquel les bras (4) font saillie.

11. Support de fil dentaire selon l'une des revendications précédentes, **caractérisé en ce que** la plus grande largeur de la poignée (8) se situe approximativement à la hauteur de l'élément d'arrêt (18) ou d'une charnière à film (16) qui relie l'élément de protection (14) avec le corps principal (2) et qu'à partir de là, la poignée s'amincit des deux côtés de manière conique.

12. Support de fil dentaire selon l'une des revendications précédentes, **caractérisé en ce que** les bras (4) ont substantiellement la forme d'une anneau en demi-cercle et que une ligne (L) reliant les deux extrémités des bras forme avec l'axe longitudinal (M) de la poignée (8) un angle compris entre 45° et 65°.
